(19) Europäisches Patentamt
European Patent Office
Office européen des brevets

(11) **EP 3 936 955 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: 20201478.3

(22) Anmeldetag: **13.10.2020**

(51) Internationale Patentklassifikation (IPC):
**G05B 19/418** (2006.01) **B65B 57/06** (2006.01)
**B65B 57/08** (2006.01) **B65G 47/31** (2006.01)

(52) Gemeinsame Patentklassifikation (CPC):
**G05B 19/41815; B65B 57/06; B65B 57/08;**
**B65B 57/14; B65B 57/16; B65B 65/003;**
**B65G 43/08; B65G 43/10;** G05B 2219/31272;
G05B 2219/31385; Y02P 80/40; Y02P 90/02

(54) **VERPACKUNGSLINIE EINER VERPACKUNGSANLAGE SOWIE VERFAHREN ZUM BETREIBEN EINER SOLCHEN VERPACKUNGSLINIE**

PACKAGING LINE OF A PACKAGING SYSTEM AND METHOD FOR OPERATING SUCH A PACKAGING LINE

CHAÎNE D'EMBALLAGE D'UNE LIGNE D'EMBALLAGE AINSI QUE PROCÉDÉ DE FONCTIONNEMENT D'UNE TELLE CHAÎNE D'EMBALLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2020 EP 20184794**

(43) Veröffentlichungstag der Anmeldung:
**12.01.2022 Patentblatt 2022/02**

(73) Patentinhaber: **Illinois Tool Works Inc.**
**Glenview, IL 60025 (US)**

(72) Erfinder:
• **SCHOHAUS, Hermann**
**49626 Berge (DE)**
• **SCHULTE, Theo**
**49584 Fürstenau (DE)**
• **WÖHLE, Linus**
**48480 Schapen (DE)**

(74) Vertreter: **Meissner Bolte Partnerschaft mbB**
**Patentanwälte Rechtsanwälte**
**Postfach 10 26 05**
**86016 Augsburg (DE)**

(56) Entgegenhaltungen:
**EP-A2- 1 863 169 DE-A1- 102015 110 390**

## Beschreibung

Die vorliegende Erfindung betrifft allgemein Verpackungslinien einer Verpackungsanlage sowie Verfahren zum Betreiben derartiger Verpackungslinien.

Unter dem hierin verwendeten Begriff "Verpackungslinie" sind in der Regel in Reihe geschaltete und miteinander arbeitende Verpackungsmaschinen zu verstehen. Dabei übernehmen die Verpackungsmaschinen Aufgaben beispielsweise des Kartonfaltens und Kartonaufrichtens, der Kartonbefüllung und der Veredelung.

Verpackungslinien der hierin berücksichtigten Art weisen somit in der Regel verschiedene Verpackungseinheiten oder Verpackungsmaschinen auf, wie beispielsweise bereits gefüllte Verpackungen (hierin allgemein auch als "Produkte" bezeichnet) weiterverarbeiten, indem beispielsweise die gefüllten Verpackungen/Produkte zu Einheiten zusammengefügt werden oder mit Strohhalmen, Etiketten oder dergleichen versehen werden.

Da die einzelnen Verpackungsmaschinen innerhalb einer Verpackungslinie in der Regel sequenziell hintereinander angeordnet sind und sich die einzelnen Verarbeitungsschritte in der Regel in ihrer Verarbeitungsdauer unterscheiden, ist eine Koordination der Verarbeitungsschritte der einzelnen Verpackungsmaschinen untereinander für einen reibungslosen Ablauf eines Verpackungsprozesses unerlässlich.

Insbesondere ist es für einen störungsfreien Betrieb notwendig, zu verhindern, dass sich Produkte-/Verpackungen auf den einzelnen Transport- oder Förderbändern der Verpackungslinie zurückstauen, da dies - vor allem bei Weichverpackungen - zur Beschädigung der Verpackungen/Produkte führen kann.

Um einen vollständig reibungslosen und verpackungsschonenden Ablauf eines Verpackungsprozesses zu gewährleisten, ist es aber nicht nur erforderlich, dass die Abläufe der Verpackungsmaschinen untereinander entsprechend aufeinander abgestimmt sind, sondern auch, dass der Prozess innerhalb der einzelnen Verpackungsmaschinen entsprechend koordiniert ist.

Die Druckschrift EP 3 313 737 B1 betrifft ein Verfahren zum Betreiben einer Verpackungslinie einer Verpackungsanlage mit den Merkmalen des Oberbegriffs des unabhängigen Patentanspruchs 1.

Zu diesem Zweck wird in der Druckschrift EP 3 313 737 B1 eine Verpackungsanlage vorgeschlagen, welche zumindest zwei Verpackungseinrichtungen bzw. Verpackungsmaschinen aufweist, wobei jede Verpackungseinrichtung/Verpackungsmaschine ein Einlaufband und ein Auslaufband aufweist, und wobei das Einlaufband der Verpackungseinrichtung/Verpackungsanlage Verpackungen bzw. Produkte zuführt und das Auslaufband von der Verpackungsanlage verarbeitete Produkte aufnimmt. Zwischen dem Auslaufband einer ersten Verpackungsanlage und dem Einlaufband einer zweiten Verpackungsanlage ist ein Transportband angeordnet.

Um ein schonendes sowie zugleich eine präzises und flexibles Abpacken von gefüllten Verpackungen/Produkten zu ermöglichen, wird in der Druckschrift EP 3 313 737 B1 insbesondere vorgeschlagen, eine zentrale Steuerung vorzusehen, welche die Ist-Geschwindigkeit der Einlaufbänder und der Auslaufbänder der Verpackungsmaschinen sowie des Transportbands ermittelt, und welche ferner die Ist-Packungsdichte der Einlaufbänder und der Auslaufbänder der Verpackungsmaschinen sowie des Transportbands ermittelt, wobei die zentrale Steuerung abhängig von der Ist-Packungsdichte und den Ist-Geschwindigkeiten die Soll-Geschwindigkeiten für die Einlaufbänder und die Auslaufbänder der Verpackungsmaschinen sowie des Transportbands bestimmt.

Obgleich mit Hilfe der in der Druckschrift EP 3 313 737 B1 vorgeschlagenen zentralen Steuerung eine Koordination der einzelnen Verpackungsmaschinen realisierbar ist, weist die aus diesem Stand der Technik bekannte Lösung dennoch gewisse Nachteile auf. Insbesondere ist die aus diesem Stand der Technik bekannte Verpackungsanlage bzw. Verpackungslinie nicht oder nur mit hohem Aufwand besonders zügig an Änderungen anpassbar, die im Arbeitsprozess auftreten können. Darüber hinaus ist aufgrund der zentralen Steuerung ein relativ aufwändiges Kommunikationsnetzwerk zwischen den einzelnen Einrichtungen der Verpackungslinie notwendig.

Andererseits ist aus der Druckschrift EP 2 075 660 A1 (TETRA LAVAL Holdings & Finance S.A.) ein Verpackungssystem, insbesondere zur Verpackung von Lebensmitteln, bekannt. Das aus diesen Stand der Technik bekannte Verpackungssystem weist eine Verpackungslinie umfassend mehrere Verpackungsstationen/Verpackungsmaschinen auf, wie beispielsweise eine Abfülleinheit, eine Strohhalm-Applikatoreinheit, eine Kartonisierungseinheit und dergleichen.

Darüber hinaus kommt ein Verpackungslinienüberwachungssystem zum Einsatz, welches dazu dient, die Verpackungsanlage zentral und möglichst stabil zu steuern, wobei ferner die Verpackungsanlage flexibel konfigurierbar sein soll, ohne dass spezifische Software zum Betreiben der Verpackungsanlage bzw. des Verpackungssystems erforderlich ist.

Das aus diesem Stand der Technik bekannte Verpackungssystem weist die gleichen Nachteile auf, welche bereits zuvor im Zusammenhang mit der EP 3 313 737 B1 beschrieben wurde.

Darüber hinaus wurde in der EP 2 075 660 A1 nicht das Problem der Beschädigung einzelner Produkte/Verpackungen insbesondere aufgrund einer mangelhaften Koordination einzelner Verpackungsmaschinen berücksichtigt.

Demnach liegt der vorliegenden Erfindung die Aufgabe zugrunde, eine Verpackungslinie einer Verpackungsanlage sowie eine entsprechendes Verfahren zum Betreiben einer derartigen Verpackungslinie zur Verfügung zu stellen, welche mit einem möglichst geringen Aufwand ein schonendes Abpacken von Produkten, wie beispielsweise gefüllten Verpackungen ermöglicht, wobei zusätzlich hierzu die Verpackungslinie schnell an Änderungen anpassbar sein soll, die im Arbeitsprozess auftreten können. Insbesondere soll die Verschwendung von Ressourcen minimiert, die Produktivität der Verpackungslinie gesteigert und insgesamt die Flow-Effizienz verbessert werden.

Diese Aufgabe wird im Hinblick auf das Betriebsverfahren durch den Gegenstand des unabhängigen Patentanspruchs 1 gelöst, wobei vorteilhafte Weiterbildungen des Betriebsverfahrens in den abhängigen Patentansprüchen 2 bis 8 angegeben sind. Die der Erfindung zugrundeliegende Aufgabe wird ferner durch den Gegenstand des nebengeordneten Patentanspruchs 9 gelöst, welcher eine entsprechende Verpackungslinie einer Verpackungsanlage betrifft.

Derartige Verpackungslinien zeichnen sich insbesondere durch eine Vielzahl von Verpackungsmaschinen (Verpackungsstationen/Verpackungseinrichtungen) aus, welche die Verpackungen bzw. Produkte in jeweils unterschiedlichen Arbeitsschritten weiterverarbeiten. So sind beispielsweise bei Abfüllanlagen für Getränkekartons im Anschluss an eine Füllmaschine beispielsweise zunächst ein Strohhalm-Applikator und anschließend ein Schrumpffolien-Applikator im Einsatz. Im Schrumpffolien-Applikator werden mehrere Verpackungen/Produkte zu einem Gebinde zusammengefasst.

Bei der Auslegung einer Verpackungslinie bzw. einer Verpackungsanlage steht zunehmend die Verarbeitungsrate im Vordergrund, d.h. die Anzahl an Verpackungen bzw. Produkten je Zeiteinheit. Je höher die Verarbeitungsrate einer Verpackungslinie ist, desto effizienter arbeitete die Verpackungslinie.

Demnach besteht ein grundsätzlicher Bedarf danach, die Verarbeitungsrate einer einzelnen Verpackungsmaschine der Verpackungslinie zu optimieren, um somit die Verarbeitungsrate der gesamten Verpackungslinie zu erhöhen. Dabei ist es beim Betreiben einer Verpackungslinie das Ziel, die jeweils langsamste Verpackungsmaschine möglichst mit ihrer maximalen Verarbeitungsrate zu betreiben, um auf diese Weise den Durchsatz an Produkten der Verpackungslinie möglichst zu maximieren.

Andererseits ist es im Betrieb einer Verpackungslinie in der Regel nicht vermeidbar, dass es im Rahmen der Verarbeitung der Produkte an einzelnen Verpackungsmaschinen auch zu Störungen kommen kann. Um einen möglichst störungsfreien Produktionsablauf aufrecht erhalten zu können und/oder um Schwankungen in der Verarbeitungsrate von Verpackungsmaschinen der Verpackungslinie zu kompensieren, ist es allgemein üblich, dass zwischen zwei Verpackungsmaschinen eine Speichervorrichtung beispielsweise in Gestalt eines Speichertischs oder in Gestalt eines (zusätzlichen) Transportbands angeordnet wird, wobei im Falle eines (zusätzlichen) Transportbands die entsprechend Füllrate des (zusätzlichen) Transportbands variabel einstellbar ist, damit dieses (zusätzliche) Transportband als Pufferspeicher dienen kann.

Das (zusätzliche) Transportband nimmt Verpackungen auf, wenn stromabwärts des Transportbands in der Verpackungslinie eine Störung auftritt und die Produkte/Verpackungen nicht mehr weiter stromabwärts verarbeitet werden können. Sobald die stromabwärtige Störung behoben ist, können die auf dem (zusätzlichen) Transportband zwischengespeicherten Produkte von dem (zusätzlichen) Transportband abgerufen und weiterverarbeitet werden.

Demnach ist es durch das (zusätzliche) Transportband möglich, die im Hinblick auf das Transportband stromaufwärtigen Verpackungsmaschinen oder andere Maschinen für eine gewisse Zeitperiode weiterzubetreiben, zumindest solange, bis die Füllrate des zusätzlichen Transportbands gefüllt ist, d.h. die Aufnahmekapazität des zusätzlichen Transportbands ausgeschöpft ist.

Um bei der erfindungsgemäßen Verpackungslinie die Flow-Effizienz zu verbessern und insbesondere die Verpackungslinie schnell an Änderungen, die im Arbeitsprozess auftreten können, anzupassen, wird erfindungsgemäß vorgeschlagen, dass die Verpackungslinie eine auf dem Prinzip eines Pull-Systems aufgebaute Bandsteuerung ("Line-Controller") aufweist, welche ausgebildet ist, entgegen der Transportrichtung der Verpackungslinie insbesondere bedarfsweise Leistungsanforderungen und/oder Informationen bzw. linienrelevante Daten der Verpackungslinie von dem Einlaufförderband der stromabwärtigen Verpackungsmaschine zu dem mindestens einen Transportband und von dem mindestens einen Transportband zu dem Auslaufförderband der stromaufwärtigen Verpackungsmaschine zu kommunizieren.

Die Kommunikation mit Hilfe der dezentral ausgestalteten und auf dem Prinzip eines Pull-Systems aufgebauten Bandsteuerung läuft über ein geeignetes Bus-System, insbesondere Profibus-System.

Durch das Vorsehen einer derartigen dezentral agierenden Bandsteuerung, welche ausgebildet ist, bedarfsweise Leistungsanforderungen und/oder Informationen entgegen der Transportrichtung der Verpackungslinie zu kommunizieren, ist ein Lean-Verpackungsprinzip realisierbar, welches einen Ablauf schafft, bei dem die einzelnen Transport- und/oder Förderbänder der Verpackungslinie nur dann aktiviert werden, wenn tatsächlich Bedarf besteht. Insbesondere dient die Implementierung des erfindungsgemäßen Bandsteuersystems dazu, die Produkte von stromaufwärtigen Verpackungsmaschinen oder Komponenten der Verpackungsanlage anhand einer echten Nachfrage einer stromabwärtigen Verpackungsanlage zu aktivieren.

Auf diese Weise konzentriert sich jede Verpackungsmaschine bzw. jedes Transportband der Verpackungslinie jeweils auf eine - in Transportrichtung der Verpackungslinie gesehen - unmittelbar nachgeschaltete Komponente der Verpackungslinie. Dieser Ansatz ermöglicht es einer Komponente der Verpackungslinie sich schnell an Änderungen anzupassen, die im Arbeitsprozess auftreten können, die Verschwendung von Ressourcen zu minimieren, die Produktivität zu steigern und die Flow-Effizienz insgesamt zu verbessern.

Im Hinblick auf das erfindungsgemäße Betriebsverfahren der Verpackungslinie einer Verpackungsanlage ist vorgesehen, dass eine aktuelle Maschinenleistung der stromabwärtigen Verpackungsmaschine der Verpackungslinie festgelegt und/oder ermittelt wird, wobei die aktuelle Maschinenleistung die Anzahl der von der stromabwärtigen Verpackungsmaschine pro Zeiteinheit zu verarbeitenden Produkte definiert.

Ferner ist bei dem erfindungsgemäßen Betriebsverfahren vorgesehen, dass eine Leistungsanforderung für das mindestens eine Transportband der Verpackungslinie, welches in Reihe mit den Verpackungsmaschinen der Verpackungslinie angeordnet ist, ermittelt wird. Die Leistungsanforderung für das mindestens eine Transportband definiert eine Anzahl der mittels des mindestens einen Transportbands pro Zeiteinheit dem Einlaufförderband der - in Transportrichtung der Verpackungslinie gesehen - stromabwärtigen Verpackungsmaschine zuzuführenden Produkte.

Das erfindungsgemäße Betriebsverfahren zeichnet sich auch dadurch aus, dass eine Transportgeschwindigkeit des mindestens einen Transportbands automatisch festgelegt und eingestellt wird, wobei die Transportgeschwindigkeit in Abhängigkeit von der ermittelten Leistungsanforderung festgelegt wird.

Es ist vorgesehen, dass das Verfahren ferner den Verfahrensschritt des Ermittelns eines aktuellen Füllgrads des Einlaufförderbands der mindestens einen Verpackungsmaschine aufweist, wobei die Transportgeschwindigkeit des mindestens einen Transportbands in Abhängigkeit von dem ermittelten Füllgrad des Einlaufförderbands festgelegt wird.

Im Hinblick auf die Transportgeschwindigkeit des mindestens einen Transportbands ist vorgesehen, dass diese gemäß der folgenden Formel berechnet wird:

$$V = R_{ne} \cdot \frac{l}{Fl_{next}}$$

mit:

$V$ = Transportgeschwindigkeit

$R_{ne}$ = Leistungsanforderung von dem Einlaufförderband der mindestens einen Verpackungsmaschine

$Fl_{next}$ = Füllgrad des Einlaufförderbands der mindestens einen Verpackungsmaschine mit $0 \leq Fl_{next} \leq 1$

$l$ = Produktlänge

Insbesondere wird die Transportgeschwindigkeit des mindestens einen Transportbands derart festgelegt, dass bei der Übergabe von Produkten von dem mindestens einen Transportband zu dem Einlaufförderband der mindestens einen Verpackungsmaschine ein Aufschieben der Produkte auf dem Einlaufförderband verhindert wird.

Grundsätzlich ist es im Hinblick auf das erfindungsgemäße Verfahren denkbar, dass beim Ermitteln der Leistungsanforderung für das mindestens eine Transportband der Verpackungslinie die festgelegte und/oder ermittelte aktuelle Maschinenleistung der stromabwärtigen Verpackungsmaschine und ein aktueller Füllgrad des Einlaufförderbands der stromabwärtigen Verpackungsmaschine berücksichtigt werden.

Die aktuelle Maschinenleistung der Verpackungsmaschine definiert dabei die von der Verpackungsmaschine pro Zeiteinheit be- bzw. verarbeitete Anzahl an Produkten. Die aktuelle Maschinenleistung ist in der Regel geringer als die sog. mögliche Maschinenleistung der Verpackungsmaschine, wobei es sich bei der möglichen Maschinenleistung der Verpackungsmaschine um die Anzahl der von der Verpackungsmaschine theoretisch pro Zeiteinheit ver- bzw. bearbeiteten Produkte handelt.

Die aktuelle Maschinenleistung der Verpackungsmaschine in der Verpackungslinie wird in Abhängigkeit von der möglichen Maschinenleistung sämtlicher Verpackungsmaschinen der Verpackungslinie sowie in Abhängigkeit einer aktuell möglichen Ausbringleistung von Transportbändern zwischen den Verpackungsmaschinen berechnet/festgelegt. Hierzu werden die möglichen Maschinenleistungen aller Verpackungsmaschinen der Verpackungslinie abgefragt und dann die aktuelle Maschinenleistung der Verpackungsmaschinen auf den kleinsten abgefragten Wert der möglichen Maschinenleistungen festgesetzt.

Insbesondere dient die von der Bandsteuerung festgelegte aktuelle Maschinenleistung für alle Verpackungsmaschinen der Verpackungslinie als Leistungsziel, wobei insbesondere die stromabwärtige Verpackungsmaschine der Verpackungslinie ausgebildet ist, auf Grundlage des Leistungsziels von dem mindestens einen vorgeschalteten Transportband eine berechnete Leistung anzufordern. Diese Leistungsanforderung an das vorgeschaltete Transportband setzt sich aus dem Leistungsziel der stromabwärtigeren Verpackungsmaschine und einem Füllgrad des Einlaufförderbands der Verpackungsmaschine zusammen.

Die Leistungsanforderung für das mindestens eine Transportband wird insbesondere derart ermittelt, dass die mittels des mindestens einen Transportbands dem Einlaufförderband der stromabwärtigen Verpackungsmaschine pro Zeiteinheit zuzuführende Anzahl an Produkten der Anzahl an pro Zeiteinheit zuzuführenden Produkten entspricht, welche von der stromabwärtigen Verpackungsmaschine gemäß der aktuellen Maschinenleistung zu verarbeiten ist, und welche notwendig ist, um einen vorab festgelegten oder festlegbaren Füllgrad des Einlaufförderbands der stromabwärtigen Verpackungsmaschine zu erreichen.

Gemäß Weiterbildungen des erfindungsgemäßen Betriebsverfahrens weist dieses den Verfahrensschritt des Ermittelns einer Leistungsanforderung für das Auslaufförderband der stromaufwärtigen Verpackungsmaschine auf, wobei die Leistungsanforderung eine Anzahl der mittels des Auslaufförderbands der stromaufwärtigen Verpackungsmaschine pro Zeiteinheit dem mindestens einen Transportband zuzuführenden Produkte definiert.

Beim Ermitteln der Leistungsanforderung für das Auslaufförderband der stromaufwärtigen Verpackungsmaschine werden insbesondere die festgelegte und/oder ermittelte aktuelle Maschinenleistung der stromabwärtigen Verpackungsmaschine, ein aktueller Füllstand des Einlaufförderbands der stromabwärtigen Verpackungsmaschine sowie eine aktueller Füllgrad des mindestens einen Transportbands berücksichtigt.

Insbesondere ist es in diesem Zusammenhang denkbar, dass die Leistungsanforderung für das Auslaufförderband der stromaufwärtigen Verpackungsmaschine derart ermittelt wird, dass die mittels des Auslaufförderbands der stromaufwärtigen Verpackungsmaschine dem mindestens einen Transportband pro Zeiteinheit zuzuführende Anzahl an Produkten der Anzahl an pro Zeiteinheit zuzuführenden Produkten entspricht, welche von der stromabwärtigen Verpackungsmaschine gemäß der aktuellen Maschinenleistung zu verarbeiten ist, und welche notwendig ist, um einen vorab festgelegten oder festlegbaren Füllgrad des Einlaufförderbands der stromabwärtigen Verpackungsmaschine sowie einen vorab festgelegten oder festlegbaren Füllgrad des mindestens einen Transportbands zu erreichen.

Gemäß Ausführungsformen des erfindungsgemäßen Verfahrens ist vorgesehen, dass das Verfahren ferner den Verfahrensschritt des jeweiligen Ermittelns eines aktuellen Füllgrads des Auslaufförderbands der stromaufwärtigen Verpackungsmaschine und eines aktuellen Füllgrads des mindestens einen Transportbands aufweist. Das Verfahren weist ferner ein Ermitteln eines aktuellen Füllgrads des Einlaufförderbands der stromabwärtigen Verpackungsmaschine auf.

Gemäß bevorzugten Realisierungen der erfindungsgemäßen Lösung ist vorgesehen, dass eine Transportgeschwindigkeit zumindest des mindestens einen insbesondere dem Einlaufförderband der stromabwärtigen Verpackungsmaschine unmittelbar vorgeschalteten Transportbands eingestellt wird, wenn von dem mindestens einen Transportband Produkte dem Einlaufförderband der stromabwärtigen Verpackungsmaschine oder einem anderen unmittelbar nachgeschalteten Transportband zuzuführen sind, wobei die Transportgeschwindigkeit in Abhängigkeit von dem Füllgrad des Einlaufförderbands der stromabwärtigen Verpackungsmaschine bzw. in Abhängigkeit von dem Füllgrad des unmittelbar nachgeschalteten Transportbands berechnet wird.

Die Transportgeschwindigkeit des Transportbands wird gemäß der nachfolgenden Formel berechnet:

$$V = R_{ne} \cdot \frac{l}{Fl_{next}}$$

mit:

$V$ = Transportgeschwindigkeit
$R_{ne}$ = Leistungsanforderung vom nachgeschalteten Transport- bzw. Förderband
$Fl_{next}$ = Füllgrad des nachgeschalteten Transport- bzw. Förderbands
$l$ = Produktlänge

Im Hinblick auf die erfindungsgemäße Verpackungslinie ist zur Umsetzung des erfindungsgemäßen Betriebsverfahrens die bereits erwähnte Bandsteuerung vorgesehen. Die Bandsteuerung ist auf dem Prinzip eines Pull-Systems aufgebaut und ausgebildet, entgegen der Transportrichtung der Verpackungslinie insbesondere bedarfsweise Leistungsanforderungen und/oder Informationen bzw. linienrelevante Daten von dem Einlaufförderband der stromabwärtigen Verpackungsmaschine zu dem mindestens einen Transportband und von dem mindestens einen Transportband zu dem Auslaufförderband der stromaufwärtigen Verpackungsmaschine über ein Bus-System, insbesondere Profibus-System, zu kommunizieren.

Gemäß Realisierungen der Bandsteuerung ist diese ausgebildet, von der stromabwärtigen Verpackungsmaschine eine erste Leistungsanforderung an das der stromabwärtigen Verpackungsmaschine zugeordnete Einlaufförderband abzugeben, wobei die erste Leistungsanforderung eine Anzahl der mittels des Einlaufförderbands pro Zeiteinheit der stromabwärtigen Verpackungsmaschine zuzuführenden Produkte definiert.

Die Bandsteuerung ist ferner ausgebildet, von dem Einlaufförderband der stromabwärtigen Verpackungsmaschine eine zweite Leistungsanforderung an das dem Einlaufförderband unmittelbar vorgeschaltete Transportband abzugeben, wobei die zweite Leistungsanforderung eine Anzahl der mittels des unmittelbar vorgeschalteten Transportbands dem Einlaufförderband der stromabwärtigen Verpackungsmaschine pro Zeiteinheit zuzuführende Produkte definiert.

Insbesondere ist die Bandsteuerung ferner ausgebildet, von dem dem Einlaufförderband unmittelbar vorgeschalteten Transportband eine dritte Leistungsanforderung an ein dem Transportband unmittelbar vorgeschaltetes weiteres Transportband oder an das Auslaufförderband der stromaufwärtigen Verpackungsmaschine abzugeben, wobei die dritte Leistungsanforderung einen Anzahl der mittels des weiteren Transportbands oder mittels des Auslaufförderbands der stromaufwärtigen Verpackungsmaschine dem dem Einlaufförderband unmittelbar vorgeschalteten Transportband pro Zeiteinheit zuzuführenden Produkte definiert.

Vorzugsweise ist die erste Leistungsanforderung durch eine aktuelle Maschinenleistung der stromabwärtigen Verpackungsmaschine bestimmt, wobei - wie bereits erwähnt - die aktuelle Maschinenleistung die Anzahl der von der stromabwärtigen Verpackungsmaschine pro Zeiteinheit zu verarbeitenden Produkte definiert.

Die zweite Leistungsanforderung bestimmt sich vorzugsweise durch eine aktuelle Maschinenleistung der stromabwärtigen Verpackungsmaschine und durch einen aktuellen Füllgrad des der stromabwärtigen Verpackungsmaschine zugeordneten Einlaufförderbands.

Die dritte Leistungsanforderung ist vorzugsweise durch eine aktuelle Maschinenleistung der stromabwärtigen Verpackungsmaschine, durch einen aktuellen Füllgrad des der stromabwärtigen Verpackungsmaschine zugeordneten Einlaufförderbands und durch einen aktuellen Füllgrad des dem Einlaufförderband unmittelbar vorgeschalteten Transportbands bestimmt.

Es ist vorgesehen, dass dem Einlaufförderband der stromaufwärtigen Verpackungsmaschine, dem mindestens einen Transportband und dem Einlaufförderband der stromabwärtigen Verpackungsmaschine jeweils ein System zum Erfassen eines aktuellen Füllgrads des entsprechenden Förderbands bzw. Transportbands zugeordnet ist.

Die Bandsteuerung ist ausgebildet, eine Transportgeschwindigkeit des mindestens einen Transportbands in Abhängigkeit von dem aktuellen Füllgrad eines dem mindestens einen Transportband - in Transportrichtung der Verpackungslinie gesehen - unmittelbar nachgeschalteten Transport- oder Förderbands einzustellen. Bei dem nachgeschalteten Transport- oder Förderband handelt es sich insbesondere um das Einlaufförderband der stromabwärtigen Verpackungsmaschine. Bei dem aktuellen Füllgrad des nachgeschalteten Transport- oder Förderbands handelt es sich insbesondere um den aktuellen Füllgrad des nachgeschalteten Transport- oder Förderbands zum Zeitpunkt einer Leistungsanforderung von dem nachgeschalteten Transport- oder Förderband.

Die Systeme zum Erfassen eines aktuellen Füllgrads des entsprechenden Förderbands bzw. Transportbands weisen jeweils ein Lichtschrankensystem mit einer Lichtschranke am Bandanfang und einer Lichtschranke am Bandende auf.

Dabei sind die Lichtschranken an den jeweiligen Bandanfängen vorzugsweise jeweils so angebracht bzw. ausgebildet, dass bei Belegung durch ein Produkt diese wieder freigefahren werden, wenn das entsprechende Förder- bzw. Transportband läuft. Andererseits sind vorzugsweise die Lichtschranken an den jeweiligen Bandenden so angebracht bzw. ausgebildet, dass bei Belegung durch ein Produkt diese nicht wieder freigefahren werden, wenn eine entsprechend nachgeschaltetes Förder- bzw. Transportband läuft.

Die Bandsteuerung ist gemäß bevorzugten Ausführungsformen ausgebildet, die Transportgeschwindigkeit des mindestens einen Transportbands auch in Abhängigkeit von einer Leistungsanforderung des dem mindestens einen Transportband - in Transportrichtung der Verpackungslinie gesehen - unmittelbar nachgeschalteten Transport- und/oder Förderbands einzustellen, wobei die Transportgeschwindigkeit insbesondere umso höher ist, je größer die über die Leistungsanforderung definierte Anzahl an pro Zeiteinheit zuzuführenden Produkte und je kleiner der Füllgrad des dem mindestens einen Transportband - in Transportrichtung der Verpackungslinie gesehen - unmittelbar nachgeschalteten Transport- oder Förderbands ist.

Gemäß Ausführungsformen der erfindungsgemäßen Verpackungslinie ist zwischen den mindestens zwei in Reihe geschalteten und miteinander arbeitenden Verpackungsmaschinen eine Vielzahl von miteinander arbeitenden Transportbändern in Reihe angeordnet.

Nachfolgend wird unter Bezugnahme auf die beiliegenden Zeichnungen das Funktionsprinzip der erfindungsgemäßen Verpackungslinie bzw. des erfindungsgemäßen Verfahrens zum Betreiben einer Verpackungslinie anhand von schematischen Ausführungsbeispielen näher beschrieben.

Es zeigen:

FIG. 1    schematisch eine exemplarische Ausführungsform der erfindungsgemäßen Verpackungslinie in einer Gesamtübersicht;

FIG. 2    schematisch drei in Reihe geschaltete und miteinander arbeitende Transportbänder einer exemplarischen Ausführungsform der erfindungsgemäßen Verpackungslinie; und

FIG. 3    schematisch drei in Reihe geschaltete und miteinander arbeitende Transportbänder einer exemplarischen Ausführungsform der erfindungsgemäßen Verpackungslinie zur Verdeutlichung der Füllgraderfassung.

Eine Verpackungslinie der hierin berücksichtigten Art umfasst in Reihe geschaltete und miteinander arbeitende Verpackungsmaschinen. Dabei übernehmen sie Aufgaben beispielsweise des Kartonfaltens und Kartonaufrichtens, der Kartonbefüllung und der Veredelung. Verpackungslinien können beispielsweise mit einem Sammelpacker modular erweitert werden.

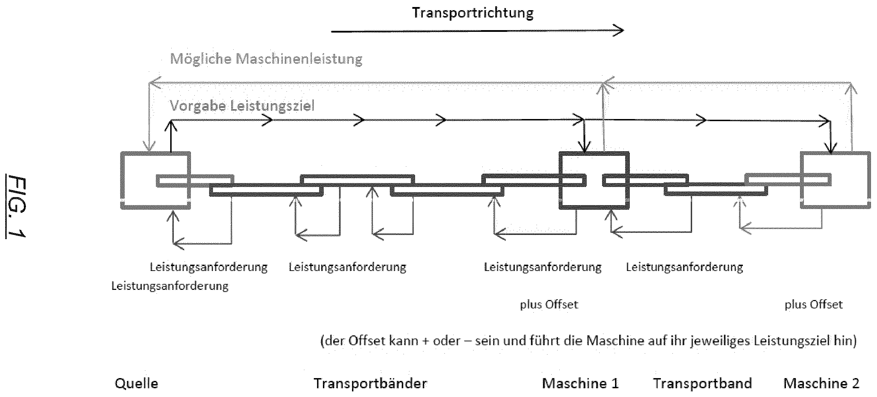

In der beispielsweise in FIG. 1 schematisch dargestellten Verpackungslinie sind nacheinander (stromabwärts) unterschiedliche Verpackungseinrichtungen bzw. Verpackungsmaschinen vorgesehen, welche insbesondere verschiedene Nennausbringungen und Einstellausbringungen aufweisen. Die Nennausbringung bestimmt dabei die Anzahl der Produkte/Packungen pro Zeiteinheit, welche durch die entsprechende Verpackungsmaschine ausgebracht werden kann und kann auch als Nennleistung bezeichnet werden. Die Einstellausbringung bestimmt die tatsächliche Anzahl der Verpackungen/Produkte, die pro Zeiteinheit ausgebracht werden und kann auch als aktuelle Leistung bezeichnet werden. Die Anzahl an Verpackungen/Produkten, die eine Verpackungsmaschine pro Zeiteinheit aufnehmen kann, kann auch als Aufnahmeleistung bezeichnet werden. Diese ist in der Regel identisch zur Einstellausbringung, insbesondere, wenn in der Verpackungsmaschine, was die Regel darstellt, die Anzahl der eingebrachten Produkte gleich der Anzahl der ausgebrachten Produkte ist.

Da in der Verpackungslinie die nacheinander angeordneten Verpackungsmaschinen insbesondere verschiedene Nennausbringungen und Einstellausbringungen aufweisen, ist in der Regel auch die Aufnahmeleistung der verschiedenen Verpackungsmaschinen unterschiedlich.

Wie in FIG. 1 schematisch dargestellt, ist vor und nach (d.h. in Transportrichtung der Verpackungslinie gesehen stromaufwärts und stromabwärts) jeder einzelnen Verpackungsmaschine ein Förder- bzw. Transportband vorgesehen, welches insbesondere Teil der jeweiligen Verpackungsmaschine ist. Am Einlauf einer jeden Verpackungsmaschine ist ein Einlaufförderband vorgesehen und am Auslauf der Verpackungsmaschine ist ein Auslaufförderband vorgesehen.

Da die Verpackungsmaschinen in der Verpackungslinie sequenziell hintereinander angeordnet sind, ist ein störungsfreier Betrieb notwendig, um zu verhindern, dass sich Produkte auf den jeweiligen Transport- bzw. Förderbändern zurückstauen.

Ein Produktstau am Einlauf einer Verpackungsmaschine kann dadurch verhindert werden, dass im Bereich des Einlaufförderbands ein Klemmer bzw. Stopper vorgesehen ist, der den Weitertransport der Produkte zum Einlauf der Verpackungsmaschine verhindert. Nachfolgende Produkte laufen dann auf die durch den Stopper gestoppten Produkte auf und bilden einen Stau. Diese Vorgehensweise ist jedoch bei Weichverpackungen problematisch, da diese sich bei gegenseitiger Berührung untereinander beschädigen können.

Vor daher ist bei der in den Zeichnungen gezeigten erfindungsgemäßen Lösung eine Bandsteuerung ("Line-Controller") vorgesehen, welche die zentrale Verwaltung der linienrelevanten Daten der einzelnen Verpackungsmaschinen und der sonstigen Komponenten der Verpackungslinie, wie insbesondere der Transport- oder Förderbänder, die sich in der Verpackungslinie befinden, übernimmt. Die wesentliche Steuerungsfunktion der Bandsteuerung ist, dass jede einzelne Verpackungsmaschine und jedes einzelne Transport- bzw. Förderband der Verpackungslinie seine mögliche Leistung an die Bandsteuerung sendet.

Die Bandsteuerung wiederum begrenzt die Leistung aller Verpackungsmaschinen in der Verpackungslinie auf die langsamste gemeldete Maschinenleistung und der aktuell möglichen Ausbringleistung des mindestens einen zwischen den Verpackungsmaschinen vorgesehenen und als "Speicher" dienenden Transportbands.

Hieraus ergibt sich für alle Verpackungsmaschinen ein Leistungsziel. Auf Basis dieses Leistungsziels fordert jede Verpackungsmaschine eine berechnete Leistung von dem zuführenden Transport- bzw. Förderband an.

In FIG. 1 sind die entsprechenden Leistungsanforderungen von den Komponenten der Verpackungslinie entgegen der Transportrichtung der Verpackungslinie mit dem Bezugszeichen L und den entsprechenden Pfeilen angedeutet.

Dabei ergibt sich die Leistungsanforderung bei den Transport- bzw. Förderbändern aus der Leistungsanforderung des Nachfolgebands und dem aktuellen Füllgrad des eigenen Transportbands.

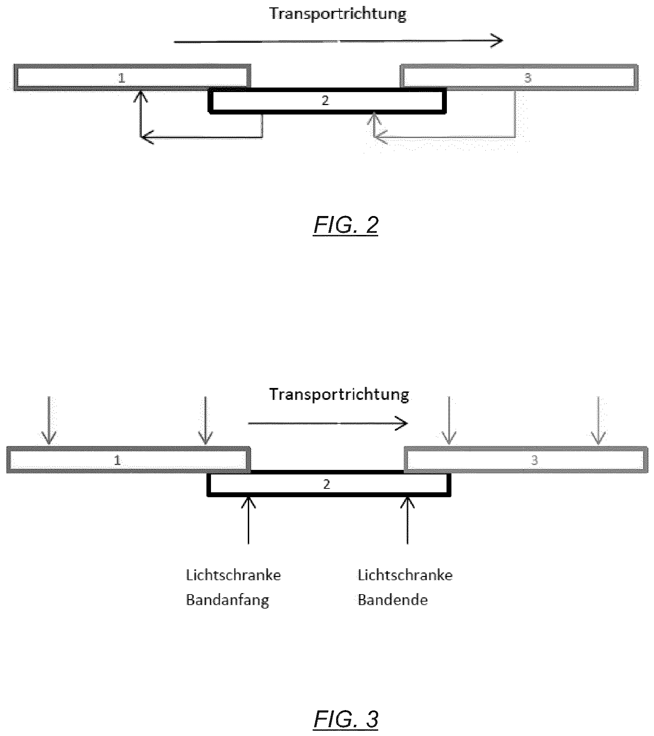

In FIG. 3 ist schematisch eine entsprechende Füllgradbestimmung bei den Transport- bzw. Förderbändern einer Verpackungslinie gezeigt. Bei dem in FIG. 3 schematisch gezeigten Ausführungsbeispiel erfolgt die Füllgradbestimmung bei jedem Transport- bzw. Förderband mit Hilfe von zwei Lichtschranken.

Im Einzelnen ist - wie in FIG. 3 schematisch angedeutet - eine erste Lichtschranke am Bandanfang des entsprechenden Transport- bzw. Förderbands und eine weitere Lichtschranke am Ende des Bands des entsprechenden Transport- bzw. Förderbands vorgesehen.

Die Lichtschranke am Bandanfang ist vorzugsweise so angebracht, dass bei Belegung durch ein Produkt diese Lichtschranke wieder freigefahren wird, wenn das entsprechende Transport- bzw. Förderband läuft und das - in Transportrichtung der Verpackungslinie gesehen - vorgeschaltete Transport- bzw. Förderband steht bzw. langsamer läuft. Andererseits ist die Lichtschranke am Bandende vorzugsweise so angebracht, dass bei Belegung durch ein Produkt diese nicht wieder freigefahren wird, wenn das nachgeschaltete Transportband läuft.

Demnach ist bei der in den Zeichnungen gezeigten exemplarischen Ausführungsform der Verpackungslinie vorgesehen, dass jedes Transport- bzw.-Förderband für sich den aktuellen Füllgrad ermittelt. Dies wird mit Hilfe der Lichtschranke am Bandanfang, der Transportbandgeschwindigkeit und der Transportbandlänge berechnet. Der Soll-Füllgrad ist eine einstellbare Größe und kann von einem Bediener der Verpackungslinie über eine Schnittstelle (beispielsweise am Panel) eingestellt werden.

Die Bandsteuerung ist auf dem Prinzip eines Pull-Systems aufgebaut. Daraus ergibt sich ein Informationsfluss entgegen der Transportrichtung der Verpackungslinie. Hieraus folgt, dass immer eine Leistungsanforderung (Anzahl an Produkten pro Zeiteinheit) von einem Nachfolgeband oder auch einer Verpackungsmaschine übergeben werden muss. Im Umkehrschluss muss auch dem vorgeschalteten Band diese Leistungsanforderung weitergereicht werden.

Fordert beispielsweise bei dem schematisch in FIG. 2 gezeigten System das nachgeschaltete Band 120 Produkte pro Minute an und der aktuelle Füllgrad des nachgeschalteten Bands entspricht dem vorab festgelegten oder festlegbaren Soll-Füllgrad, so wird auch dem vorgeschalteten Band eine Anforderung von 120 Produkten pro Minute übergeben.

Fordert hingegen das nachgeschaltete Band 0 Produkte pro Minute an und der aktuelle Füllgrad entspricht dem vorab festgelegten oder festlegbaren Soll-Füllgrad (d.h. der Füllgrad ist erreicht), so wird auch dem vorgeschalteten Band eine Anforderung von 0 Produkten pro Minute übergeben und das vorgeschaltete Band stoppt sofort.

Wenn hingegen das nachgeschaltete Band 0 Produkte pro Minute anfordert und der aktuelle Füllgrad des nachgeschalteten Bands nicht dem Soll-Füllgrad entspricht (d.h. der Füllgrad des nachgeschalteten Bands ist nicht erreicht), so wird dem vorgeschalteten Transportband noch so lange eine Anforderung übergeben, bis der aktuelle Füllgrad des nachgeschalteten Bands dem vorab festgelegten oder festlegbaren Soll-Füllgrad entspricht. Dann stoppt das vorgeschaltete Band.

Demnach ist bei der beispielsweise in FIG. 1 gezeigten exemplarischen Ausführungsform der erfindungsgemäßen Verpackungslinie vorgesehen, dass jede Verpackungsmaschine in der Lage ist, dem vorgeschalteten Transport- bzw. Förderband die benötigte Produktanzahl mitzuteilen. Diese Produktanforderung bzw. Leistungsanforderung setzt sich aus der aktuellen Taktzahl (d.h. der aktuellen Maschinenleistung) der Verpackungsmaschine zusätzlich eines Offsets zusammen. Der Offset kann positiv sowie negativ sein und führt die Verpackungsmaschine auf ihr jeweiliges Leistungsziel hin.

Die Verpackungsmaschine sollte die Befüllung im Einlaufbereich (d.h. den Füllgrad des Einlaufförderbands) erkennen. Wie bereits angedeutet, kann dies durch die Füllgraderkennung auf dem Einlaufförderband oder auch durch Auswertung eines Puffers hinter dem Aufteiler erfolgen. Die maximale Taktzahl der Verpackungsmaschine wird durch das von der Bandsteuerung ermittelte Leistungsziel begrenzt.

Um bei leeren Transportbändern die Produkte zügig zur nächsten Verpackungsmaschine zu transportieren, wird bei der in den Zeichnungen schematisch dargestellten Ausführungsform der erfindungsgemäßen Verpackungslinie die Geschwindigkeit der Transportbänder in Abhängigkeit vom Füllgrad des nachgeschalteten Transportbands berechnet. Die Transportgeschwindigkeit wird insbesondere so berechnet, dass ein Aufschieben der Produkte an den Übergaben verhindert wird.

Beispielsweise fordert bei dem in FIG. 2 gezeigten Ausführungsbeispiel das nachgeschaltete Transportband von dem vorderen Transportband die benötigte Anzahl an Produkten an. Aus dieser Anforderung und dem Füllgrad des nachgeschalteten Transportbands wird die Transportgeschwindigkeit wie in nachfolgender Gleichung dargestellt berechnet:

$$V = R_{ne} \cdot \frac{l}{Fl_{next}}$$

mit:

$V$ = Transportgeschwindigkeit
$R_{ne}$ = Leistungsanforderung vom nachgeschalteten Transport- bzw. Förderband
$Fl_{next}$ = Füllgrad des nachgeschalteten Transport- bzw. Förderbands
$l$ = Produktlänge

Die Vernetzung der Verpackungslinie wird vorzugsweise mit dem Profibus-DP realisiert. Das bedeutet, dass alle für die Produktion relevanten Daten zwischen der Bandsteuerung und den Verpackungsmehrschienen per Profibus-DP übertragen werden.

**Patentansprüche**

1. Verfahren zum Betreiben einer Verpackungslinie einer Verpackungsanlage, wobei die Verpackungslinie mindestens eine Verpackungsmaschine mit einem Einlaufförderband aufweist, wobei die Verpackungslinie ferner mindestens ein Transportband aufweist, welches - in Transportrichtung der Verpackungslinie gesehen - stromaufwärts des Einlaufförderbandes der mindestens einen Verpackungsmaschine und in Reihe mit dem Einlaufförderband der mindestens einen Verpackungsmaschine angeordnet ist, wobei das Verfahren die folgenden Verfahrensschritte aufweist:

   i) Festlegen und/oder Ermitteln einer aktuellen Maschinenleistung der mindestens einen Verpackungsmaschine, wobei die aktuelle Maschinenleistung die Anzahl der von der mindestens einen Verpackungsmaschine pro Zeiteinheit zu verarbeitenden Produkte definiert;
   ii) Ermitteln einer Leistungsanforderung für das mindestens eine Transportband, wobei die Leistungsanforderung eine Anzahl der mittels des mindestens einen Transportbands pro Zeiteinheit dem Einlaufförderband der mindestens einen Verpackungsmaschine zuzuführenden Produkte definiert,
   das Verfahren **gekennzeichnet durch** folgende Schritte:

   iii) Ermitteln eines aktuellen Füllgrads des Einlaufförderbands mit Hilfe von zwei Lichtschranken oder mit Hilfe einer Lichtschranke am Bandanfang, einer Transportbandgeschwindigkeit und einer Transportbandlänge.

iv) automatisches Festlegen und Einstellen einer Transportgeschwindigkeit des mindestens einen Transportbands, wobei die Transportgeschwindigkeit in Abhängigkeit von der ermittelten Leistungsanforderung festgelegt wird,

wobei die Verpackungslinie eine auf dem Prinzip eines Pull-Systems aufgebaute, dezentrale Bandsteuerung aufweist, welche über ein Bus-System Leistungsanforderungen entgegen der Transportrichtung der Verpackungslinie von dem Einlaufförderband der Verpackungsmaschine zu dem mindestens einen Transportband und von dem mindestens einen Transportband zu einem Auslaufförderband einer stromaufwärtigen Verpackungsmaschine kommuniziert, wobei die Bandsteuerung ausgebildet ist, von dem Einlaufförderband der stromabwärtigen Verpackungsmaschine eine Leistungsanforderung $R_{ne}$ an das dem Einlaufförderband unmittelbar vorgeschaltete Transportband abzugeben, wobei die Leistungsanforderung eine Anzahl der mittels des unmittelbar vorgeschalteten Transportbands dem Einlaufförderband der stromabwärtigen Verpackungsmaschine pro Zeiteinheit zuzuführende Produkte definiert, wobei die Transportgeschwindigkeit des Transportbands gemäß der folgenden Formel berechnet wird:

$$V = R_{ne} \cdot \frac{l}{Fl_{next}}$$

mit:

$V$ = Transportgeschwindigkeit
$R_{ne}$ = Leistungsanforderung von dem Einlaufförderband der mindestens einen Verpackungsmaschine
$Fl_{next}$ = Füllgrad des Einlaufförderbands der mindestens einen Verpackungsmaschine mit $0 < Fl_{next} \leq 1$
$l$ = Produktlänge

wobei, wenn hingegen das nachgeschaltete Band 0 Produkte pro Minute anfordert und der aktuelle Füllgrad des nachgeschalteten Bands nicht einem Soll-Füllgrad entspricht, d. h. der Füllgrad des nachgeschalteten Bands nicht erreicht ist, dem vorgeschalteten Transportband noch so lange eine Anforderung übergeben wird, bis der aktuelle Füllgrad des nachgeschalteten Bands dem vorab festgelegten oder festlegbaren Soll-Füllgrad entspricht, wobei dann das vorgeschaltete Band stoppt.

2. Verfahren nach Anspruch 1,
wobei die Transportgeschwindigkeit des mindestens einen Transportbands derart festgelegt wird, dass bei der Übergabe von Produkten von dem mindestens einen Transportband zu dem Einlaufförderband der mindestens einen Verpackungsmaschine ein Aufschieben der Produkte auf dem Einlaufförderband verhindert wird.

3. Verfahren nach Anspruch 1 oder 2,
wobei die Verpackungslinie insgesamt n in Reihe geschaltete Verpackungsmaschinen aufweist, wobei n eine natürliche Zahl größer Null ist, und wobei eine aktuelle Maschinenleistung der mindestens einen Verpackungsmaschine in Abhängigkeit von einer möglichen Maschinenleistung einer jeden der insgesamt n Verpackungsmaschine festgelegt und/oder ermittelt wird.

4. Verfahren nach Anspruch 3,
wobei die aktuelle Maschinenleistung der mindestens einen Verpackungsmaschine ferner in Abhängigkeit von einer aktuell möglichen Ausbringleistung des mindestens einen Transportbands festgelegt und/oder ermittelt wird.

5. Verfahren nach einem der Ansprüche 1 bis 4,

wobei die Verpackungslinie mindestens zwei in Reihe geschaltete und miteinander arbeitende Verpackungsmaschinen vorzugsweise mit jeweils einem Einlaufförderband und einem Auslaufförderband aufweist, wobei das mindestens ein Transportband zwischen dem Auslaufförderband einer - in Transportrichtung der Verpackungslinie gesehen - stromaufwärtigen Verpackungsmaschine und dem Einlaufförderband einer - in Transportrichtung der Verpackungslinie gesehen - stromabwärtigen Verpackungsmaschine in Reihe mit den Verpackungsmaschinen angeordnet ist, wobei das Verfahren ferner die folgenden Verfahrensschritte aufweist:

i) Festlegen und/oder Ermitteln einer aktuellen Maschinenleistung der stromabwärtigen Verpackungsmaschine, wobei die aktuelle Maschinenleistung die Anzahl der von der stromabwärtigen Verpackungsmaschine pro Zeiteinheit zu verarbeitenden Produkte definiert; und
ii) Ermitteln einer Leistungsanforderung für das mindestens eine Transportband, wobei die Leistungsanforderung eine Anzahl der mittels des mindestens einen Transportbands pro Zeiteinheit dem Einlaufförderband der stromabwärtigen Verpackungsmaschine zuzuführenden Produkte definiert,

wobei beim Ermitteln der Leistungsanforderung für das mindestens eine Transportband die festgelegte und/oder ermittelte aktuelle Maschinenleistung der stromabwärtigen Verpackungsmaschine und optional ein aktueller Füllgrad des Einlaufförderbands der stromabwärtigen Verpackungsmaschine berücksichtigt werden.

6. Verfahren nach Anspruch 5,
wobei die Leistungsanforderung für das mindestens eine Transportband vorzugsweise derart ermittelt wird, dass die mittels des mindestens einen Transportbands dem Einlaufförderband der stromabwärtigen Verpackungsmaschine pro Zeiteinheit zuzuführende Anzahl an Produkten der Anzahl an pro Zeiteinheit zuzuführenden Produkten entspricht, welche von der stromabwärtigen Verpackungsmaschine gemäß der aktuellen Maschinenleistung zu verarbeiten ist, und welche notwendig ist, um einen vorab festgelegten oder festlegbaren Füllgrad des Einlaufförderbands der stromabwärtigen Verpackungsmaschine zu erreichen.

7. Verfahren nach Anspruch 5 oder 6,

wobei das Verfahren ferner den folgenden optionalen Verfahrensschritt aufweist:
iii) Ermitteln einer Leistungsanforderung für das Auslaufförderband der stromaufwärtigen Verpackungsmaschine, wobei die Leistungsanforderung eine Anzahl der mittels des Auslaufförderbands der stromaufwärtigen Verpackungsmaschine pro Zeiteinheit dem mindestens einen Transportband zuzuführenden Produkte definiert,
wobei beim Ermitteln der Leistungsanforderung für das Auslaufförderband der stromaufwärtigen Verpackungsmaschine die festgelegte und/oder ermittelte aktuelle Maschinenleistung der stromabwärtigen Verpackungsmaschine und ein aktueller Füllgrad des Einlaufförderbands der stromabwärtigen Verpackungsmaschine sowie optional ein aktueller Füllgrad des mindestens einen Transportbands berücksichtigt werden.

8. Verfahren nach Anspruch 7,
wobei die Leistungsanforderung für das Auslaufförderband der stromaufwärtigen Verpackungsmaschine derart ermittelt wird, dass die mittels des Auslaufförderbands der stromaufwärtigen Verpackungsmaschine dem mindestens einen Transportband pro Zeiteinheit zuzuführende Anzahl an Produkten der Anzahl an pro Zeiteinheit zuzuführenden Produkten entspricht, welche von der stromabwärtigen Verpackungsmaschine gemäß der aktuellen Maschinenleistung zu verarbeiten ist, und welche notwendig ist, um einen vorab festgelegten oder festlegbaren Füllgrad des Einlaufförderbands der stromabwärtigen Verpackungsmaschine sowie einen vorab festgelegten oder festlegbaren Füllgrad des mindestens einen Transportbands zu erreichen.

9. Verpackungslinie einer Verpackungsanlage, wobei die Verpackungslinie mindestens eine Verpackungsmaschine mit einem Einlaufförderband oder mindestens zwei in Reihe geschaltete und miteinander arbeitende Verpackungsmaschinen mit vorzugsweise jeweils einem Einlaufförderband und einem Auslaufförderband aufweist, wobei die Verpackungslinie ferner mindestens ein Transportband aufweist, welches - in Transportrichtung der Verpackungslinie gesehen - stromaufwärts des Einlaufförderbandes der mindestens einen Verpackungsmaschine und in Reihe mit dem Einlaufförderband der mindestens einen Verpackungsmaschine angeordnet ist, oder welches zwischen dem Auslaufförderband einer - in Transportrichtung der Verpackungslinie gesehen - stromaufwärtigen Verpackungsmaschine und dem Einlaufförderband einer - in Transportrichtung der Verpackungslinie gesehen - stromabwärtigen Verpackungsmaschine in Reihe mit den Verpackungsmaschinen angeordnet ist, wobei die Verpackungslinie ferner eine auf dem Prinzip eines Pull-Systems aufgebaute, dezentrale Bandsteuerung aufweist, welche ausgebildet ist, das Verfahren nach einem der Ansprüche 1 bis 8 auszuführen.

## Claims

1. A method for operating a packaging line of a packaging installation, wherein the packaging line comprises at least one packaging machine having an infeed conveyor belt, wherein the packaging line further comprises at least one transport belt which - viewed in the transport direction of the packaging line - is disposed upstream of the infeed conveyor belt of the at least one packaging machine and in series with the infeed conveyor belt of the at least one packaging machine, wherein the method comprises the following method steps:

i) defining and/or determining a current machine performance of the at least one packaging machine, wherein the current machine performance defines the number of products to be processed by the at least one packaging machine per unit of time;
ii) determining an output request for the at least one transport belt, wherein the output request defines a number of products to be delivered to the infeed conveyor belt of the at least one packaging machine by means of the at least one transport belt per unit of time,

the method **characterized by** the following steps:

iii) determining a current fill level of the infeed conveyor belt using two light barriers or using a light barrier at the beginning of the belt, a transport belt speed, and a transport belt length.

iv) automatically defining and setting a transport speed of the at least one transport belt, wherein the transport speed is determined as a function of the determined output request, wherein the packaging line comprises a belt control system which is constructed according to the principle of a pull system, which communicates output requests via a Bus System against the transport direction of the packaging line from the infeed conveyor belt of the packaging machine to the at least one transport belt and from the at least one transport belt to an outfeed conveyor belt of an upstream packaging machine, wherein the belt controller is configured to deliver an output request $R_{ne}$ from the infeed conveyor belt of the downstream packaging machine to the transport belt immediately upstream of the infeed conveyor belt, wherein the output request defines a number of products to be supplied per unit of time to the infeed conveyor belt of the downstream packaging machine by means of the immediately upstream conveyor belt, wherein the transport speed of the conveyor belt is calculated according to the formula:

$$V = R_{ne} \cdot \frac{l}{Fl_{next}}$$

$V$ = transport speed
$R_{ne}$ = output request from the infeed conveyor belt of the at least one packaging machine
$Fl_{next}$ = fill level of the infeed conveyor belt of the at least one packaging machine with $0 < Fl_{next} \leq 1$
$l$ = product length
wherein, if the downstream belt requests 0 products per minute and the current fill level of the downstream belt does not correspond to a target fill level, i.e., the fill level of the downstream belt has not been reached, a request is submitted to the upstream transport belt until the current fill level of the downstream belt corresponds to the previously defined or definable target fill level, wherein the upstream belt then stops.

2. The method according to Claim 1,
wherein the transport speed of the at least one transport belt is defined such that, when products are transferred from the at least one transport belt to the infeed conveyor belt of the at least one packaging machine, pushing of the products on the infeed conveyor belt is prevented.

3. The method according to Claim 1 or 2,
wherein the packaging line comprises a total of n packaging machines connected in series, wherein n is a natural number greater than zero, and wherein a current machine performance of the at least one packaging machine is defined and/or determined as a function of a possible machine performance of each one of the total of n packaging machines.

4. The method according to Claim 3,
wherein the current machine performance of the at least one packaging machine is furthermore defined and/or determined as a function of a currently possible output of the at least one transport belt.

5. The method according to one of claims 1 to 4,

wherein the packaging line comprises at least two packaging machines, which are connected in series and work together and preferably each comprise an infeed conveyor belt and an outfeed conveyor belt, wherein the at least one transport belt is disposed between the outfeed conveyor belt of a - viewed in the transport direction of the packaging line - upstream packaging machine and the infeed conveyor belt of a - viewed in the transport direction of the packaging line - downstream packaging machine in series with the packaging machines, wherein the method comprises the following method steps:

i) defining and/or determining a current machine performance of the downstream packaging machine, wherein the current machine performance defines the number of products to be processed by the downstream packaging machine per unit of time; and
ii) determining an output request for the at least one transport belt, wherein the output request defines a number of products to be delivered to the infeed conveyor belt of the downstream packaging machine by means of the at least one transport belt per unit of time,

wherein the defined and/or determined current machine performance of the downstream packaging machine and optionally a current fill level of the infeed conveyor belt of the downstream packaging machine are taken into consideration when determining the output request for the at least one transport belt.

6. The method according to Claim 5,
wherein the output request for the at least one transport belt is preferably determined such that the number of products to be delivered to the infeed conveyor belt of the downstream packaging machine per unit of time by means of the at least one transport belt corresponds to the number of products to be delivered per unit of time which are to be processed by the downstream packaging machine in accordance with the current machine performance and which is necessary to achieve a previously defined or definable filling level of the infeed conveyor belt of the downstream packaging machine.

7. The method according to Claim 5 or 6,

wherein the method further comprises the following optional method step:
iii) determining an output request for the outfeed conveyor belt of the upstream packaging machine, wherein the output request defines a number of products to be delivered to the at least one transport belt per unit of time by means of the outfeed conveyor belt of the upstream packaging machine,
wherein, the defined and/or determined current machine performance of the downstream packaging machine, a current fill level of the infeed conveyor belt of the downstream packaging machine, and optionally a current fill level of the at least one transport belt, are taken into consideration when determining the output request for the outfeed conveyor belt of the upstream packaging machine.

8. The method according to claim 7,

wherein the output request for the outfeed conveyor belt of the upstream packaging machine is determined such that
the number of products to be delivered to the at least one transport belt per unit of time by means of the outfeed conveyor belt of the upstream packaging machine corresponds to the number of products to be delivered per unit of time which are to be processed by the downstream packaging machine in accordance with the current machine performance and which is necessary to achieve a previously defined or definable fill level of the infeed conveyor belt of the downstream packaging machine and a previously defined or definable fill level of the at least one transport belt.

9. A packaging line of a packaging installation, wherein the packaging line comprises at least one packaging machine having an infeed conveyor belt or at least two packaging machines, which are connected in series and work together and preferably each comprise an infeed conveyor belt and an outfeed conveyor belt, wherein the packaging line further comprises at least one transport belt which - viewed in the transport direction of the packaging line - is disposed upstream of packaging machine and the infeed conveyor belt of a - viewed in the transport direction of the packaging line - downstream packaging machine in series with the packaging machines, or which is disposed between the outfeed conveyor belt of a - viewed in the transport direction of the packaging line - downstream packaging machine in series with the packaging machines, wherein the packaging line further comprises a belt control system which is constructed according to the principle of a pull system, which is configured to perform the method according to one of the claims 1 to 8.

**Revendications**

1. Procédé pour faire fonctionner une ligne d'emballage d'une installation d'emballage dans lequel la ligne d'emballage comprend l'au moins une machine d'emballage ayant une courroie de transport d'alimentation, dans lequel la ligne d'emballage comprend en outre l'au moins une courroie de transport qui, vue dans la direction de transport de la ligne d'emballage, est disposée en amont de la courroie de convoyeur d'alimentation de l'au moins une machine d'emballage et en série avec la courroie de convoyeur d'alimentation de l'au moins une machine d'emballage, dans lequel le procédé comprend les étapes de procédé suivantes :

i) la définition et/ou la détermination d'une performance de machine actuelle de l'au moins une machine d'emballage, dans laquelle la performance de machine actuelle définit le nombre de produits à traiter par l'au moins une machine d'emballage par unité de temps ;
ii) la détermination d'une demande de sortie pour l'au moins une courroie de transport, dans laquelle la demande de sortie définit un nombre de produits à délivrer à la courroie de convoyeur d'alimentation de l'au moins une machine d'emballage au moyen de l'au moins une courroie de transport par unité de temps,

le procédé étant **caractérisé par** les étapes suivantes :

iii) la détermination d'un niveau de remplissage actuel de la courroie de transport d'alimentation à l'aide de deux barrières lumineuses ou à l'aide d'une barrière lumineuse au début de la courroie,

Vitesse de la courroie de transport et longueur de la courroie de transport.

iv) la définition et le réglage automatiques d'une vitesse de transport de l'au moins une courroie de transport, dans lequel la vitesse de transport est déterminée en fonction de la demande de sortie déterminée, dans lequel la ligne d'emballage comprend un système de commande de courroie qui est construit selon le principe d'un système de traction, qui communique des demandes de sortie via un système de bus à l'encontre de la direction de transport de la ligne d'emballage de la courroie de transport d'entrée de la machine d'emballage à l'au moins une courroie de transport et de l'au moins une courroie de transport à une courroie de transport de sortie d'une machine d'emballage en amont, dans lequel le dispositif de commande de courroie est configuré pour délivrer une demande de sortie $R_{ne}$ depuis la courroie de convoyeur d'alimentation de la machine d'emballage en aval à la courroie de transport immédiatement en amont de la courroie de convoyeur d'alimentation, dans lequel la demande de sortie définit un nombre de produits à fournir par unité de temps à la courroie de transport d'alimentation de la machine d'emballage en aval au moyen de la courroie de transport immédiatement en amont, dans lequel la vitesse de transport de la courroie de transport est calculée selon la formule :

$$V = R_{ne} \cdot \frac{l}{Fl_{next}}$$

$V$ = vitesse de transport

$R_{ne}$ = demande de sortie de la courroie de transport d'alimentation de la ou des machines d'emballage

$Fl_{next}$ = niveau de remplissage de la courroie de transport d'alimentation de la ou des machines d'emballage avec $0 < Fl_{next} \leq 1$

1 = longueur du produit

dans lequel, si la courroie en aval demande 0 produit par minute et que le niveau de remplissage actuel de la courroie en aval ne correspond pas à un niveau de remplissage cible, c'est-à-dire que le niveau de remplissage de la courroie en aval n'a pas été atteint, une demande est soumise à la courroie de transport en amont jusqu'à ce que le niveau de remplissage actuel de la courroie en aval corresponde au niveau de remplissage cible défini ou définissable précédemment, où la courroie en amont s'arrête alors.

2. Procédé selon la revendication 1,
dans lequel la vitesse de transport de l'au moins une courroie de transport est définie de telle sorte que, lorsque les produits sont transférés de l'au moins une courroie de transport à la courroie de convoyeur d'alimentation de l'au moins une machine d'emballage, la poussée des produits sur la courroie de convoyeur d'alimentation est empêchée.

3. Procédé selon la revendication 1 ou 2,
où la ligne d'emballage comprend un total de n machines d'emballage connectées en série, où n est un nombre naturel supérieur à zéro, et où une performance de machine actuelle de l'au moins une machine d'emballage est définie et/ou déterminée en fonction d'une performance de machine possible de chacune du total de n machines d'emballage.

4. Procédé selon la revendication 3,
dans lequel la performance de machine actuelle de l'au moins une machine d'emballage est en outre définie et/ou déterminée en fonction d'une sortie actuellement possible de l'au moins une courroie de transport.

5. Procédé selon l'une des revendications 1 à 4,

dans lequel la ligne d'emballage comprend les au moins deux machines d'emballage qui sont reliées en série et travaillent ensemble et comprennent de préférence chacune une courroie de transport d'entrée et une courroie de transport de sortie, dans lequel l'au moins une courroie de transport est disposée entre la courroie de convoyeur de sortie, vue dans la direction de transport de la ligne d'emballage, d'une machine d'emballage en amont et la courroie de convoyeur d'entrée, vue dans la direction de transport de la ligne d'emballage, d'une machine d'emballage en aval en série avec les machines d'emballage, dans lequel le procédé comprend les étapes de procédé suivantes :

i) la définition et/ou la détermination d'une performance de machine actuelle de la machine d'emballage en aval, dans laquelle la performance de machine actuelle définit le nombre de produits à traiter par la machine d'emballage en aval par unité de temps ; et

ii) la détermination d'une demande de sortie pour l'au moins une courroie de transport, dans laquelle la demande de sortie définit un nombre de produits à délivrer à la courroie de convoyeur d'alimentation de la machine d'emballage en aval au moyen de l'au moins une courroie de transport par unité de temps,

dans lequel les performances de machine actuelles définies et/ou déterminées de la machine d'emballage en aval et éventuellement un niveau de remplissage actuel de la courroie de transport d'alimentation de la machine d'emballage en aval sont pris en considération lors de la détermination de la demande de sortie pour l'au moins une courroie de transport.

6. Procédé selon la revendication 5,
dans lequel la demande de sortie pour l'au moins une courroie de transport est de préférence déterminée de telle sorte que le nombre de produits à distribuer à la courroie de transport d'alimentation de la machine d'emballage en aval par unité de temps au moyen de l'au moins une courroie de transport correspond au nombre de produits à distribuer par unité de temps qui doivent être traités par la machine d'emballage en aval conformément aux performances de machine actuelles et qui sont nécessaires pour obtenir un niveau de remplissage défini au préalable ou définissable de la courroie d'alimentation de la machine d'emballage en aval.

7. Procédé selon la revendication 5 ou 6,

dans lequel le procédé comprend en outre l'étape de procédé facultative suivante :
iii) la détermination d'une demande de sortie pour la courroie de transport de sortie de la machine d'emballage en amont, dans laquelle la demande de sortie définit un nombre de produits à délivrer à l'au moins une courroie de transport par unité de temps au moyen de la courroie de transport de sortie de la machine d'emballage en amont,
dans lequel, les performances de machine actuelles définies et/ou déterminées de la machine d'emballage en aval, un niveau de remplissage actuel de la courroie de transport d'alimentation de la machine d'emballage, et facultativement, un niveau de remplissage actuel de l'au moins une courroie de transport, sont prises en compte lors de la détermination de la demande de sortie pour la courroie de transport de sortie de la machine d'emballage en amont.

8. Procédé selon la revendication 7,

dans lequel la demande de sortie pour la courroie de transport de sortie de la machine d'emballage en amont est déterminée de telle sorte que
le nombre de produits à délivrer à l'au moins une courroie de transport par unité de temps au moyen de la courroie de transport de sortie de la machine d'emballage en amont correspond au nombre de produits à délivrer par unité de temps qui doivent être traités par la machine d'emballage en aval conformément aux performances actuelles de la machine et qui sont nécessaires pour obtenir un niveau de remplissage défini ou définissable au préalable de la courroie de transport d'alimentation de la machine d'emballage en aval et un niveau de remplissage défini ou définissable au préalable de l'au moins une courroie de transport.

9. Ligne d'emballage d'une installation d'emballage dans lequel la ligne d'emballage comprend l'au moins une machine d'emballage ayant une courroie de transport d'alimentation ou les au moins deux machines d'emballage qui sont reliées en série et travaillent ensemble et comprennent de préférence chacun une courroie de transport d'entrée et une courroie de transport de sortie, dans lequel la ligne d'emballage comprend en outre l'au moins une courroie de transport qui, vue dans la direction de transport de la ligne d'emballage, est disposée en amont de la machine d'emballage et la courroie de convoyeur d'alimentation d'une machine d'emballage aval, vue dans la direction de transport de la ligne d'emballage en série avec les machines d'emballage, ou qui est disposé entre la courroie de transport de sortie d'une machine d'emballage en aval, vue dans la direction de transport de la ligne d'emballage, en série avec les machines d'emballage, dans lequel la ligne d'emballage comprend en outre un système de commande de courroie qui est construit selon le principe d'un système de traction, qui est configuré pour exécuter le procédé selon l'une des revendications 1 à 8.

*FIG. 1*

Transportrichtung

_FIG. 2_

Transportrichtung

Lichtschranke
Bandanfang

Lichtschranke
Bandende

_FIG. 3_

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3313737 B1
- EP 2075660 A1